# EUROPEAN PATENT APPLICATION

(11) **EP 2 848 450 A2**
(43) Date of publication of application: **18.03.2015**
(21) Application number: 14183487.9
(22) Date of filing: 04.09.2014
(51) Int. Cl.: B60K 37/02

(54) **Instrument panel with pointer position detection and pointer back illumination**

(30) Priority: 11.09.2013 US 201314023540
(71) Applicant: Delphi Technologies, Inc., Troy MI 48007 (US)
(72) Inventor: Davis, Jarred S., Grosse Pointe Farms, MI Michigan 48236 (US); Blackmer, Stephen C., Millington, MI Michigan 48746 (US)
(74) Representative: Robert, Vincent

(57) **Abstract**

A vehicle (10) instrument panel assembly (12) that includes a display (30), a pointer (24), and a light detector (40). The display (30) is configured to define indicia (26) on a surface of the display (30). The indicia (26) are configured to emit light (48). The pointer (24) is configured to rotate a shaft (34) of the pointer (24) about an axis (36) to align a tip (46) of the pointer (24) with the indicia (26). The pointer (24) is also configured to conduct light (48) emitted by the indicia (26) from the tip (46) into the shaft (34) when the tip (46) is substantially aligned with the indicia (26). The light detector (40) is configured to detect light (48) in the shaft (34) of the pointer (24) to determine the position of the pointer (24).

## Description

### TECHNICAL FIELD

This disclosure generally relates to an instrument panel assembly with indicia configured to emit light, and more particularly relates a light detector configured to detect light in the shaft of a pointer that conducts light emitted by the indicia from a tip of the pointer into the shaft when the tip is substantially aligned with the indicia.

### BACKGROUND OF INVENTION

When vehicle instrument panel assemblies with traditional pointers are manufactured, a camera is used to determine any offset error between the actual pointer location and a desired pointer location corresponding to an indicia or grad on the display. This offset is programmed into the instrument panel to ensure that the offset is applied each time the instrument panel is powered. If power to the instrument panel is interrupted during normal operation, the instrument cluster does a "homing" operation to spin the pointer back to a zero position. As the pointer angle is unknown when power is applied, occasionally the motor will hit an internal hard-stop with enough force that motor drive bounces back out a step or two, and so the gauge becomes inaccurate.

### SUMMARY OF THE INVENTION

In accordance with one embodiment, a vehicle instrument panel assembly is provided. The assembly includes a display, a pointer, and a light detector. The display is configured to define indicia on a surface of the display. The indicia are configured to emit light. The pointer is configured to rotate a shaft of the pointer about an axis to align a tip of the pointer with the indicia. The pointer is also configured to conduct light emitted by the indicia from the tip into the shaft when the tip is substantially aligned with the indicia. The light detector is configured to detect light in the shaft of the pointer to determine the position of the pointer.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrument panel assembly in accordance with one embodiment;
Fig. 2 is an exploded perspective view of the instrument panel of Fig. 1 in accordance with one embodiment; and
Fig. 3 is a sectional side view of the portion of a vehicle instrument panel assembly of Fig. 1 in accordance with one embodiment; and
Fig. 4 is a close-up sectional view of a portion of the instrument panel of Fig. 1 in accordance with one embodiment.

### DESCRIPTION OF THE PREFERRED EMBODIMENT

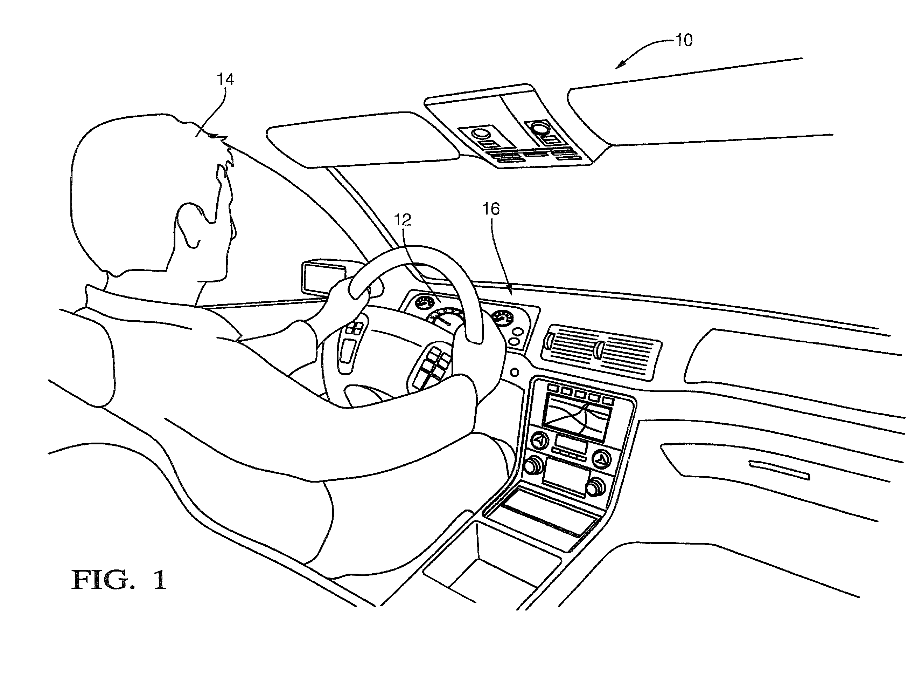

Fig. 1 illustrates a non-limiting example of a vehicle 10 equipped with an instrument panel assembly, hereafter referred to as the assembly 12, installed into a dashboard 16 of the vehicle 10. In general, the assembly 12 displays vehicle information to a human 14 or operator of the vehicle 10 such as vehicle speed, engine coolant temperature, and the like.

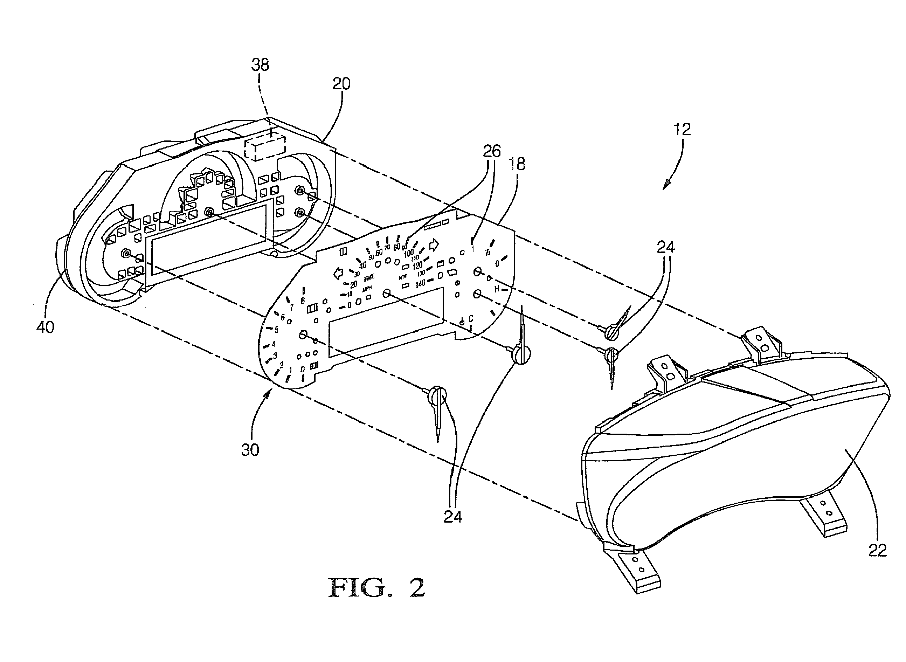

Fig. 2 illustrates a non-limiting example of the assembly 12 as it might appear when not installed into the dashboard 16 of the vehicle 10. In general, the assembly 12 includes an applique 18. In this example the applique 18 spans most of the viewing area of the assembly 12. The assembly 12 also typically includes a lens 22 for protecting the pointers 24 and the applique 18 from contact damage and contaminants. The applique 18 typically includes graphics and indicia 26 that help to determine the appearance of an instrument panel (the assembly 12). Some of the indicia 26 are configured to become visibly apparent to the human 14 only when suitably backlit. As will become apparent in the description that follows, of particular interest are the radially oriented indicia that are sometimes referred to as tick marks.

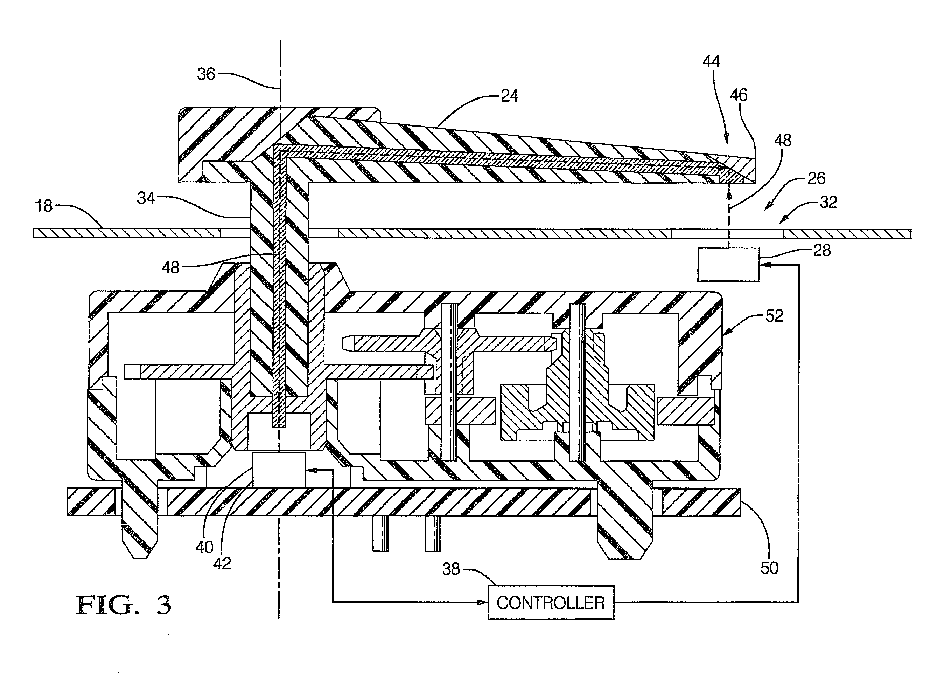

As such, the assembly 12 or display 30 is configured to define indicia 26 on a surface of the display 30, and the indicia 26 are configured to emit light. Backlighting of the applique 18 is generally provided by a number of light sources, for example a display light source 28 (Fig. 3). These light sources are preferably light emitting diodes (LEDs), as LEDs are reliable, economical, and typically generate less heat than other types of light sources such as incandescent bulbs. However, the assembly 12 described herein is not limited to using LEDs as light sources. The applique 18 overlays the display light source 28. The applique 18 also defines a transmissive portion 32 of the applique 18 that corresponds to the indicia 26.

Referring now to Fig. 3, the assembly 12 also includes a pointer 24 configured to rotate a shaft 34 of the pointer about an axis 36 to align a tip 46 of the pointer 24 with the indicia 26. Light 48 is emitted via the transmissive portion 32 of the applique 18 that forms the tick marks, i.e. the indicia 26. As the pointer 24 sweeps across the surface of the display 30, the tip 46 passes over these tick marks the light 48 propagates down the pointer toward the shaft 34. Accordingly, the pointer 24 is generally made of material transmissive of light, clear polymeric compound for example. As such, the pointer is configured to conduct light 48 emitted by the indicia 26 from the tip 46 into the shaft 34 when the tip 46 is substantially aligned with the indicia 26. As used herein, 'substantially aligned' means that the pointer 24 is aligned with the indicia 26 with enough precision that the position of the pointer 24 can be known accurately enough to determine if there is an error between the desired position and the actual position of the pointer to warrant adjusting or recalibrating the aspects of the assembly 12 that control the position of the pointer 24. By way of example and not limitation, the tip 46 may be substantially aligned when the pointer is within one degree (+/- 1°) of angle.

In order to detect the light 48 in the shaft 34, the assembly is equipped with a light detector 40. In general, the light detector 40 is configured to detect the light 48 in the shaft 34 of the pointer 24 to determine the position of the pointer 24. In this non-limiting example, the light detector 40 is shown in line with the axis. Alternatively, the light detector 40 may be offset from the axis if the pointer 24 is supported by a bearing that is centered on the axis 36.

The assembly 12 may include a controller 38 in electrical communication with the display light source 28 and the light detector 40. The controller 38 may include a processor such as a microprocessor or other control circuitry as should be evident to those in the art. The controller 38 may include memory, including non-volatile memory, such as electrically erasable programmable read-only memory (EEPROM) for storing one or more routines, thresholds and captured data. The one or more routines may be executed by the processor to perform steps for determining if signals received by the controller 38 from the light detector 40 indicate that the pointer 24 is aligned with the indicia 26. Optionally, the controller 38 is configured to output a modulation signal to the display light source 28, and is configured to receive a detection signal from the light detector 40 effective for the controller 38 to determine if the tip 46 is aligned with the indicia 26 whereby the light 48 from display light source 28 is detected by the light detector 40.

The light detector 40 may be attached to a circuit board 50 and the pointer 24 may be rotated by a stepper motor 52 that may also be controlled by the controller 38 (connection not shown), as will be recognized by those in the art.

The pointer 24, in particular the tip 46, may include a reflective element 44 configured to reflect the light 48 from the indicia 26 toward the shaft 34. The reflective element 44 may be formed by adding a reflective coating to the appropriate surfaces of the pointer 24, or may be a small mirror formed of glass or polished metal that is insert-molded into the pointer 24 near the tip 46, as will be recognized by those in the art.

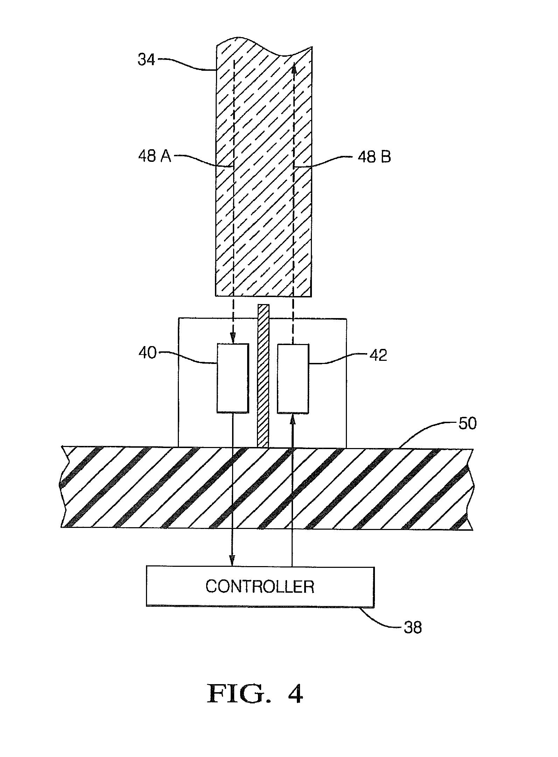

Fig. 4 illustrates a non-limiting example of a portion of the assembly 12. In addition to the light detector 40, the assembly 12 may include a pointer light source 42 configured to emit light into the shaft for illuminating the pointer 24. It has been observed that the light detector 40 is able to distinguish the light 48A originating from the display light source 28 from the light 48B originating from the pointer light source 42. However it is recognized that certain ambient lighting conditions may make such detection difficult. As such, the pointer light source 42 and/or the display light source 28 may be modulated (e.g. pulse-width-modulated) in such a manner that the controller 38 is able to distinguish the light 48A originating from the display light source 28 from the light 48B originating from the pointer light source 42, and thereby determine if the tip 46 is aligned with the indicia 26.

Accordingly, a vehicle instrument panel assembly (the assembly 12) is provided. The pointer 24 is configured so light emitted by the display light source 28 through the indicia 26 propagates through the pointer to the light detector. The controller 38 receives a signal from the light detector 40 indicative of the amount of light detected by the light detector 40, and determines if the tip 46 is substantially aligned with the indicia based on the signal from the light detector 40. In this way, the controller 38 is able to determine if the actual position of the pointer 24 corresponds with the desired position of the pointer which is controlled by the controller 38 by way of, for example, a stepper motor 52. In an alternative configuration, the indicia 26 or tick marks may be features of a trim ring configured to emit light at certain locations that can be used to determine if the pointer 24 is properly aligned.

## Claims

1. A vehicle (10) instrument panel assembly (12) comprising:
a display (30) configured to define indicia (26) on a surface of the display (30), wherein the indicia (26) are configured to emit light (48);
a pointer (24) configured to rotate a shaft (34) of the pointer (24) about an axis (36) to align a tip (46) of the pointer (24) with the indicia (26), wherein the pointer (24) is configured to conduct light (48) emitted by the indicia (26) from the tip (46) into the shaft (34) when the tip (46) is substantially aligned with the indicia (26); and
a light detector (40) configured to detect light (48) in the shaft (34) of the pointer (24) to determine the position of the pointer (24).

2. The assembly (12) in accordance with claim 1, wherein the display (30) includes an applique (18) overlaying a display light source (28), wherein the applique (18) defines a transmissive portion (32) of the applique (18) that corresponds to the indicia (26).

3. The assembly (12) in accordance with claim 1 or 2, wherein the tip (46) includes a reflective element (44) configured to reflect light (48) from the indicia (26) toward the shaft (34).

4. The assembly (12) in accordance with anyone of claims 1 to 3, wherein the assembly (12) includes a pointer light source (42) configured to emit light (48) into the shaft (34) for illuminating the pointer (24).
